# EUROPÄISCHE PATENTSCHRIFT

(11) **EP 0 960 352 B1**
(45) Veröffentlichungstag und Bekanntmachung des Hinweises auf die Patenterteilung: **15.05.2002**
(21) Anmeldenummer: 98905395.4
(22) Anmeldetag: 04.02.1998
(51) Int. Cl.: G02F 1/1335, G02B 5/30

(54) **FLÜSSIGKRISTALLANZEIGE**
LIQUID CRYSTAL DISPLAY
SYSTEME D'AFFICHAGE A CRISTAUX LIQUIDES

(30) Priorität: 17.02.1997 DE 19706029
(43) Veröffentlichungstag der Anmeldung: 01.12.1999
(73) Patentinhaber: BAYER AG, 51368 Leverkusen (DE)
(72) Erfinder: CLAUSSEN, Uwe, D-51379 Leverkusen (DE); KOSTROMINE, Serguei, D-53913 Swisttal (DE); NEIGL, Ralf, D-51373 Leverkusen (DE)
(86) Internationale Anmeldenummer: EP9800583
(87) Internationale Veröffentlichungsnummer: WO9836314

(56) Entgegenhaltungen:
- EP-A- 0 525 473
- EP-A- 0 525 477
- EP-A- 0 622 789
- US-A- 5 583 677
- STUMPE J ET AL: "Photo-orientation in amorphous and aligned films of photochromic liquid crystalline polymers" THIN SOLID FILMS, Bd. 284/285, 15.September 1996, Seiten 252-256, XP000685386

## Beschreibung

Flüssigkristall-Displays haben insbesondere in Form von TN-(twisted nematic-) oder STN-(super twisted nematic-)Displays breite Anwendung gefunden. Aufgrund der erforderlichen Schwellenspannung zur Schaltung eines Display-Elementes sind diese Flüssigkristall-Systeme zur Multiplex-Ansteuerung geeignet. Größere Displays, insbesondere für Laptop-Bildschirme, die mehr als 10⁵ Display-Elemente (Pixel) aufweisen, können mit Hilfe der Dünnfilm-Feldeffekt-Transistortechnologie (TFT) hergestellt werden. Zur Display-Technologie siehe Ullmann's encyclopedia of industrial chemistry, Vol. A 15, 1990, Seite 359 bis 391, insbesondere Seite 272 bis 277 sowie Vol. A 8, Seite 619 bis 621.

Das Flüssigkristall-Display beruht auf einer durch Anlegen eines elektrischen Feldes bewirkten Änderung der Richtung der optischen Achse in einer Schicht aus einer doppelbrechenden organischen Flüssigkeit mit quasi kristalliner Ordnung. Polarisiertes Licht erfährt beim Durchtreten der Flüssigkristallschicht eine Drehung der Polarisationsebene. Betrachtet man das durch die Flüssigkristallschicht hindurchgetretene polarisierte Licht durch eine zweite Polarisationsfolie, ergeben sich je nach Drehung der Polarisationsebene des Lichtes Hell-Dunkel-Kontraste.

Dabei wird ein möglichst unbunter Schwarz-/Weiß- bzw. Graustufen-Kontrast angestrebt. Aufgrund des Phasenunterschiedes von ordentlichem und außerordentlichem Lichtstrahl kommt es aber zur Auslöschung bestimmter Wellenlängen des weißen Lichtspektrums. Dem wird dadurch begegnet, daß der Phasenunterschied mittels λ/4- bis λ/2-Plättchen ausgeglichen wird. Der Ausgleich des Phasenunterschiedes gelingt aber nur im Bereich kleiner Betrachtungswinkel. Daher wurde auch bereits vorgeschlagen, die Phasenkompensation durch zusätzliche flüssigkristalline Schichten, die nicht durch elektrische Felder angeregt werden, auszugleichen. So wird gemäß US-A 5 472 635 vorgeschlagen, einen nematischen Flüssigkristall unterhalb der Glasübergangstemperatur einzusetzen, wobei die nematische Phase eingefroren ist. Gemäß EP-A 646 829 wird dagegen vorgeschlagen, eine Schicht aus einem niedermolekularen discotischen Flüssigkristall als Phasenkompensationsschicht einzusetzen. Eine Phasenkompensationsschicht ist auch aus US-A-5 583 677 bekannt.

Nachteilig an diesen Vorschlägen ist, daß einerseits hohe Anforderungen an die Dicke der flüssigkristallinen Schicht zu stellen sind und ferner zusätzliche transparente Trägerplatten, zwischen denen die flüssigkristalline Schicht aufgenommen wird, erforderlich sind.

Erfindungsgemäß wird nun vorgeschlagen, als Phasenkompensationsschicht eine Folie aus einem amorphen, optisch anisotropen Polymeren, dessen optische Anisotropie durch Bestrahlung mit polarisiertem Licht nach Richtung und Größe vorwählbar einschreibbar ist, vorzusehen.

Gegenstand der vorliegenden Erfindung ist gemäß Anspruch 1, ein Flüssigkristall-Display, das eine Flüssigkristallzelle, die eine Schicht aus einem flüssigkristallinen Material mit positiv dielektrischer Anisotropie zwischen zwei Elektrodenplatten enthält, außerhalb der Elektrodenplatten angeordnete Polarisatorplatten sowie eine zwischen mindestens einer der Elektrodenplatte und der dieser zugewandten Polarisatorplatte angeordnete Phasenkompensationsschicht aufweist, das dadurch gekennzeichnet ist, daß die Phasenkompensationsschicht aus einem amorphen, optisch anisotropen Polymeren besteht, dessen optische Anisotropie durch Bestrahlung mit polarisiertem Licht nach Richtung und Größe vorwählbar einschreibbar ist.

Für die erfindungsgemäße Phasenkompensationsschicht geeignete Polymere sind als photo-adressierbare Polymere an sich bekannt; siehe z.B. "Polymers as Electrooptical and Photooptical Active Media", V.P. Shibaev (Hrsg.), Springer Verlag, New York 1995. Insbesondere eignen sich Seitengruppenpolymere, von denen die Gruppe der Copolymeren sich durch eine sehr breite Variationsmöglichkeit der Eigenschaften auszeichnet. Diese Substanzen kennzeichnet die Fähigkeit, beim Bestrahlen mit polarisiertem Licht ausreichender Intensität eine dauerhafte gerichtete Doppelbrechung auszubilden.

Geeignete Polymere sind beispielsweise auch aus den DE-A 38 I0 722, DE-A 39 20 420, EP-A 622 789, EPA 704 513 und WO 96/08007 bekannt.

Erfindungsgemäß bevorzugt einsetzbare Polymere sind in den EP-A 622 789 und EP-A 704 513 offenbart.

Erfindungsgemäß weiter bevorzugt sind Homo- und Copolymere mit einer als Rückgrat wirkenden Hauptkette und davon abzweigenden, kovalent gebundenen Seitengruppen der Formeln

S¹-T¹-Q¹-A (I) (Homopolymere) oder

S¹-T¹-Q¹-A (I) und

S²-T²-Q²-M (II) (Copolymere),

worin
- S¹, S²: die Atome O, S oder den Rest NR⁶,
R⁶ Wasserstoff oder C₁-C₄-Alkyl,
- T¹,T²: den Rest (CH₂)ₙ, der gegebenenfalls durch -O-, -NR⁶- oder OSiR⁶₂Ounterbrochen und/oder gegebenenfalls durch Methyl oder Ethyl substituiert sein kann,
n die Zahlen 2, 3 oder 4,
- Q¹, Q²: einen zweibindigen Rest,
- A: eine Einheit, die elektromagnetische Strahlung aufnehmen kann und
- M: eine polarisierbare, aromatische Gruppe mit wenigstens 10 π-Elektrone bedeuten.

Insbesondere bedeuten
- Q¹,Q²: die Substituenten -S-, -SO₂-, -O-, -COO-, -CONR⁶-, -NR⁶CO-, -NR¹-. -(CH₂)ₘ- mit m = 1 oder 2 oder die Gruppe -Z¹-X-Z², worin
- Z¹, Z²: für die Substituenten -S-, -SO₂-, -O-, -COO-, -OCO-, -CONR⁶-, -NR⁶CO-, -NR¹-, -N=N-, -CH=CH-, -N=CH-, -CH=N- und
- X: für einen 5- oder 6-gliedrigen cycloaliphatischen, aromatischen oder heterocyclischen Ring, den Rest -C₁₀H₆-, den Biphenylrest, die Gruppe -(CH=CH)ₘ- und im Falle, daß Z = -COO- oder -CONR⁶- auch für eine direkte Bindung, steht,
- A: einen Azofarbstoff, der im Wellenlängenbereich zwischen 13.000 und 28.000 cm⁻¹ oder einen Stilbenfarbstoff zwischen 15.000 und 29.000 cm⁻¹ absorbiert und
- M: ein Mesogen oder eine polarisierbare, aromatische Gruppe mit wenisgens 10 π-Elektronen, mit der Maßgabe bedeutet, daß Vₘₐₓ (Q²-M) > Vₘₐₓ (Q¹-A) ist.

Bevorzugt sind Farbstoffe A, deren Absorptionsmaximum bei Wellenzahlen >23.000 cm⁻¹ liegt. Die Verbindungen sind bekannt.

Als Rückgrat bildende Hauptkette werden bevorzugt (Meth)acrylate eingesetzt.

Die erfindungsgemäßen Seitengruppenpolymeren sind im glasartigen Zustand der Polymeren optisch isotrop, amorph, transparent und nicht-lichtstreuend und können aus geeigneten Lösungsmitteln zu klar durchsichtigen Filmen vergossen werden.

Durch entsprechende Maßnahmen lassen sich auch mehrschichtige Filme erzeugen. Werden die Schichten aus Seitenkettenpolymeren gefertigt, die bei unterschiedlichen Wellenlängen absorbierende Gruppen enthalten, dann kann man bei geeigneter Wahl der Schreibwellenlänge unabhängig voneinander verschiedene Werte der Doppelbrechung in den gleichen Film schreiben.

Die Doppelbrechungen werden mittels polarisierten Lichts in die isotrope Schicht eingeschrieben, für deren Brechzahl n in den 3 Raumrichtungen x, y und z gilt nₓ = n_{y} = n_{z}. Das aus der z-Richtung einfallende, in der s-Richtung polarisierte Licht spannt eine Fläche auf, in der gilt: nₓ ≠ n_{y} und nₓ - Δnₓ = n_{y} + Δn_{y}. Diese Fläche ist um den Winkel, vorzugsweise von 25 bis 65°, insbesondere von 40 bis 50°, gegen die Oberfläche der Folie geneigt, den die z-Richtung mit ihrer Flächennormalen bildet. Die eingeschriebene Doppelbrechungsänderung kann uni- oder biaxial sein, was von der Wahl der Komponenten und in gewissem Maße auch von der Wahl der Einschreibwellenlänge abhängt. Je geringer die Absorption, desto mehr nähert sich das Ergebnis einer uniaxialen Verteilung.

Ein besonderer Vorzug der Erfindung ist es, die Doppelbrechung ortsaufgelöst nach Wunsch einstellen zu können, beispielsweise mit einem Gradienten von der Mitte des Displays zum Rand oder zur Erzeugung von permanenten Mustern, Bildern, Zeichen oder Schattierungen auf dem Display.

Die Polymeren können selbsttragende Filme bilden.

Vorzugsweise werden sie aber auf Trägermaterialien aufgebracht. Dies kann durch verschiedene an sich bekannte Techniken geschehen, wobei das Verfahren danach ausgewählt wird, ob eine dicke oder dünne Schicht gewünscht wird. Dünne Schichten können z.B. durch Spincoaten oder Rakeln aus Lösungen oder der Schmelze, dickere durch Füllen von vorgefertigten Zellen, Schmelzpressen oder Extrudieren erzeugt werden.

Erfindungsgemäß bevorzugt wird die Phasenkompensationsschicht direkt auf der Polarisatorfolie erzeugt bzw. auf diese aufgebracht, so daß ein besonderes Trägermaterial für die Polymerschicht nicht erforderlich ist. Hierdurch wird der Herstellungsprozeß erfindungsgemäßer Displays erheblich vereinfacht. Die Einschreibung der Doppelbrechung erfolgt von der nicht durch die Polarisationsfolie abgedeckten Seite der Phasenkompensationsschicht.

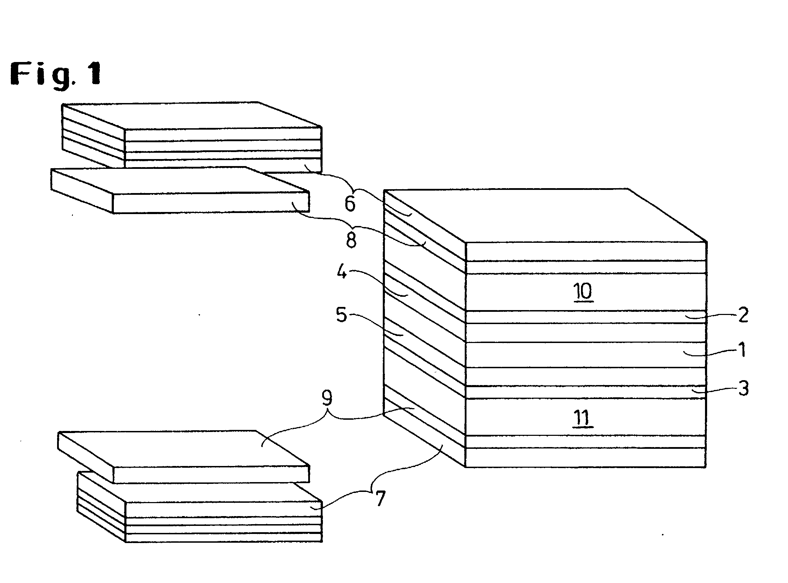

Die beigefügte Figur zeigt den prinzipiellen Aufbau eines STN-Displays. Dieser besteht aus einer Flüssigkristallschicht 1, die sich zwischen den Glas-Trägerschichten 10 und 11 befindet. Auf die Glas-Trägerschichten 10 und 11 sind die transparenten Elektrodenstrukturen aus Indium-Zinn-Oxid (ITO) 2 und 3 sowie gegebenenfalls die TFT-Schicht aufgebracht. Über der Elektrodenschicht befindet sich die Orientierungsschicht 4 bzw. 5, im allgemeinen eine gebürstete Polyimidschicht, die eingebrannt wird. Die Bürstrichtungen der beiden Orientierungsschichten sind um 90 bis 270° gegeneinander verdreht. Auf die durch die Glasträgerschichten definierte flüssigkristalline Zelle werden nun beidseitig Polarisationsschichten 6 und 7 mit um 60 bis 120° verdrehter Polarisationsebene aufgebracht. Zwischen Trägerschichten 2 und 3 und Polarisationsschichten 6 und 7 befinden sich die Phasenkompensationsschichten 8 und 9, deren Polarisationsrichtung wiederum um einen Winkel von 60 bis 120° gegen die jeweils gegenüberliegende Polarisationsschicht verdreht ist. Die Polarisationsfolien weisen im allgemeinen einen mchrschichtigen Aufbau auf, dem erfindungsgemäß bevorzugt als weitere Schicht die Phasenkompensationsschicht hinzugefügt wird. Im Falle eines reflektiv betriebenen Displays ist die rückseitige Glasträgerschicht verspiegelt.

Die nachfolgenden Beispiele erläutern den von der Bestrahlungsdichte und der Polarisation der Strahlung abhängige, in die Phasenkompensationsfolie einprägbare Doppelbrechung.

### Beispiel 1

Ausgehend von 2,4-Dicyano-4'-[(4-oxyethylenmethacryloyl-)benzamido-]-azobenzol wird das Homopolymer durch radikalische Polymerisation hergestellt und das gereinigte Polymer durch Spincoaten auf einen Glasträger in einer Schichtdicke von 0,8 µ aufgebracht. Die maximale Absorption liegt bei 25.300 cm⁻¹.

Die Proben werden mit Laserlicht der Wellenlänge 488 nm (20.500 cm⁻¹) in der z-Richtung einfallend 20 h bestrahlt und anschließend in einem Prismenkoppler die Brechungsindices richtungsabhängig gemessen. Man erhält:

| Bestrahlungsdichte | nₓ | n_{y} | n_{z} |
|---|---|---|---|
| 0 | 1,701 | 1,703 | 1,644 |
| 4 mW/cm² | 1,735 | 1,617 | 1,705 |
| 20 mW/cm² | 1,718 | 1,627 | 1.718 |

Man erhält eine uniaxiale Orientierung.

### Beispiel 2

Man verfährt wie in Beispiel 1 angegeben, verwendet aber an Stelle des Homopolymers ein Copolymer aus 40 Mol-% des in Beispiel 1 genannten Monomeren und 60 Mol-% des 2,4-Dicyano-4(N-methyl-N'-ethylenoxymethacryloyl)-azobenzol.

Die Proben werden mit Laserlicht der Wellenlänge 488 nm (20.500 cm⁻¹) und der Leistungsdichte 20 mW/cm² in der z-Richtung einfallend bestrahlt und anschließend in einem Prismenkoppler die Brechungsindices richtungsabhängig gemessen. Man erhält:

| nach | nₓ | n_{y} | n_{z} |
|---|---|---|---|
| 0 h | 1,832 | 1,832 | 1,738 |
| 2 h | 1,860 | 1,787 | 1,759 |
| 4 h | 1,891 | 1,734 | 1,780 |
| 20 h | 1,921 | 1,601 | 1,792 |

Man sieht, daß sich eine starke biaxiale Anisotropie ausgebildet hat.

## Patentansprüche

1. Flüssigkristall-Display, das eine Flüssigkristallzelle, die eine Schicht (1) aus einem Material mit positiv dielektrischer Anisotropie zwischen zwei Elektrodenplatten (2, 3) enthält, außerhalb der Elektrodenplatten angeordnete Polarisatorplatten (6, 7) sowie eine zwischen mindestens einer der Elektrodenplatten und der dieser zugewandten Polarisatorplatte angeordnete Phasenkompensationsschicht (8, 9) aufweist, die aus einem optisch adressierbaren, optisch isotropen Polymeren besteht, in das eine optische Anisotropie durch Bestrahlung mit polarisiertem Licht nach Richtung und Größe vorwählbar induzierbar ist, **dadurch gekennzeichnet, dass** das Polymer amorph und transparent ist.

2. Flüssigkristall-Display nach Anspruch 1, **dadurch gekennzeichnet, daß** die optische Anisotropie der Phasenkompensationsschicht ortsabhängig eingeschrieben ist.

3. Flüssigkristall-Display nach Anspruch 1, **dadurch gekennzeichnet, daß** das einfallende polarisierte Licht eine Fläche aufspannt, die um einen Winkel gegen die Flächennormale zur Oberfläche der Phasenkompensationsschicht geneigt ist.

4. Flüssigkristall-Display nach Anspruch 3, **dadurch gekennzeichnet, daß** der Winkel 25 bis 65° beträgt.

5. Flüssigkristall-Display nach Anspruch 1, **dadurch gekennzeichnet, daß** die Phasenkompensationsschicht eine uniaxiale Anisotropie aufweist.

## Claims

1. Liquid crystal display which has a liquid crystal cell which comprises a layer (1) of a material with positively dielectric anisotropy between two electrode plates (2, 3), polarizer plates (6, 7) arranged outside the electrode plates and a phase compensation layer (8, 9)arranged between at least one of the electrode plates and the polarizer plate facing this, which comprises an optically addressable, optically isotropic polymer in which an optical anisotropy can be induced in a pre-selectable manner according to direction and size by irradiation with polarized light, **characterized in that** the polymer is amorphous and transparent.

2. Liquid crystal display according to claim 1, **characterized in that** the optical anisotropy of the phase compensation layer is written in according to the location.

3. Liquid crystal display according to claim 1, **characterized in that** the incident polarized light spans an area which is at an angle to the area perpendicular to the surface of the phase compensation layer.

4. Liquid crystal display according to claim 3, **characterized in that** the angle is 25 to 65°.

5. Liquid crystal display according to claim 1, **characterized in that** the phase compensation layer has a uniaxial anisotropy.

## Revendications

1. Affichage à cristaux liquides qui présente une cellule à cristaux liquides qui contient une couche (1) en un matériau présentant une anisotropie diélectrique positive entre deux plaques d'électrodes (2, 3), des plaques de polarisation (6, 7) disposées à l'extérieur des plaques d'électrodes ainsi qu'une couche (8, 9) de compensation du déphasage disposée entre au moins l'une des plaques d'électrodes et la plaque de polarisation tournée vers cette dernière, laquelle cellule à cristaux liquides est constituée d'un polymère optiquement isotrope et adressable optiquement, dans lequel une anisotropie optique peut être induite de façon présélectionnée en termes de direction et de grandeur par irradiation par de la lumière polarisée, **caractérisé en ce que** le polymère est amorphe et transparent.

2. Affichage à cristaux liquides selon la revendication 1, **caractérisé en ce que** l'anisotropie optique de la couche de compensation du déphasage est définie en fonction de l'emplacement.

3. Affichage à cristaux liquides selon la revendication 1, **caractérisé en ce que** la lumière polarisée incidente s'étend sur une surface qui forme un angle oblique par rapport à la normale à la surface de la couche de compensation du déphasage.

4. Affichage à cristaux liquides selon la revendication 3, **caractérisé en ce que** l'angle vaut de 25 à 65°.

5. Affichage à cristaux liquides selon la revendication 1, **caractérisé en ce que** la couche de compensation du déphasage présente une anisotropie uniaxiale.
